(19) Europäisches Patentamt
European Patent Office
Office européen des brevets

(11) EP 0 598 809 B1

(12) **EUROPEAN PATENT SPECIFICATION**

(45) Date of publication and mention
of the grant of the patent:
**24.02.1999 Bulletin 1999/08**

(21) Application number: **92917744.2**

(22) Date of filing: **14.08.1992**

(51) Int Cl.⁶: **G01S 11/14**, G01S 5/30

(86) International application number:
**PCT/GB92/01509**

(87) International publication number:
**WO 93/04381 (04.03.1993 Gazette 1993/06)**

(54) **VEHICLE SHAPE DETERMINATION SYSTEM**

VORRICHTUNG ZUM BESTIMMEN DER FORM VON FAHRZEUGEN

SYSTEME DE DETERMINATION DE LA FORME D'UN VEHICULE

(84) Designated Contracting States:
**DE FR IT SE**

(30) Priority: **15.08.1991 GB 91176230
29.07.1992 GB 92161413**

(43) Date of publication of application:
**01.06.1994 Bulletin 1994/22**

(73) Proprietor: **HEIN-WERNER CORPORATION
Waukesha Wisconsin 53188 (US)**

(72) Inventor: **COACHWORTH, Simon
4 Four Oaks Cottages
Faversham Kent ME13 0TB (GB)**

(74) Representative: **Abnett, Richard Charles
REDDIE & GROSE
16 Theobalds Road
London WC1X 8PL (GB)**

(56) References cited:
EP-A- 0 331 445          EP-A- 0 420 500
WO-A-91/10981           DE-A- 2 704 511
US-A- 4 174 623          US-A- 4 811 250

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to vehicle measurement systems, in particular to systems to determine the shape of vehicle bodies such as automobile bodies.

Prior Art

A vehicle measurement system as described in European patent application EP-A-0244513 for example, comprises emitters of acoustic pulses, microphone receivers and microprocessor controls. The terms "acoustic" and "sound" are here used for convenience to include also "ultrasound". The emitters are mounted at various predetermined positions on a vehicle body, and are triggered under microprocessor control. Triggering generates an acoustic pulse which travels outwards from an emitter and is detected by a number of microphones. The microprocessor measures travel times of the pulse from the emitter to each of the receivers. Sufficient data is acquired to yield the three-dimensional coordinates of a given point when processed by the microprocessor.

In order to calculate positions, microphones must be placed in a configuration which is known to the microprocessor. In the disclosure of EP-A-0244513, six microphones are placed with equal separations along each side of a beam which is positioned below the vehicle and spans the width of the vehicle.

If a vehicle has been involved in a crash, its upper part is often distorted near the contact region. Measurements of the misalignment of such parts of the vehicle body are conventionally undertaken using a large ruler and slide arrangement. This is mounted over the vehicle, for example over the bonnet, and the vernier scale is read to determine the position of a point in the damaged region.

Some Problems of the Prior Art

Prior art systems such as described in EP-A-0244513 suffer from a number of problems. These include errors in position measurements due to temperature variations and air turbulence in the environment of the vehicle under test which affect the speed of sound. For example, even a 1°C variation in temperature over a measurement volume of approximately 4m x 2m x 0.5m would cause unacceptable errors. Also, air turbulence causes serious fluctuations in the data, making it unreliable.

WO-A-91/10981 describes a position determining system for use in graphical data apparatus for determining the position of a stylus on a digitizing tablet, which works by measuring the transmission time of sound from a spark generated at the stylus to microphones arranged at the edge of the tablet. A check is made to ensure that the measured travel time is within an acceptable range.

Summary of the Invention

The invention in its various aspects is defined in the appended claims to which reference should now be made.

We have appreciated that for a preferred vehicle measurement system to be useful in practice, it must be capable of operating in a garage environment where precautions against air currents and temperature variations are necessarily minimal. Also, it must be able to compensate for small localised variations in air conditions and must be capable of detecting when unacceptable conditions are present and measured position data should be rejected.

Brief Description of the Drawings

A preferred vehicle measurement system will now be described by way of example with reference to the drawings, in which:

Figure 1A is a perspective view of a beam for ultrasound measurement, and an emitter probe;
Figure 1B is a schematic diagram showing the wheels and mounting plate of the beam in cross-section;
Figure 2 is a view of a portion of the beam carrying six active microphones;
Figure 3 is a diagram showing separations of the six active microphones from a spark (an ultrasound source);
Figure 4A is a diagram of the beam indicating microphone interconnections;
Figure 4B is a cross sectional view of the beam;
Figure 5 is a schematic diagram of the vehicle measurement system showing connections to microphones of one half of the beam (one module);
Figure 6A is a view of an emitter probe in longitudinal section;
Figure 6B is a cross-sectional view through the emitter probe in the plane AA shown on Figure 6A;
Figure 6C is a cross-sectional view of an extension to the emitter probe;
Figure 7A is a top view of an upper body coupler;
Figure 7B is a view of a ball and socket joint of the MacPherson probe;
Figure 8 is a simplified perspective view of a jig for beam calibration;
Figure 9 is a cross-sectional view of the jig shown in Figure 8 together with its stand;
Figure 10A is a schematic and sectional view of one spark assembly of the beam calibration jig;
Figure 10B is a front view of the spark emitter assembly shown in Figure 10A;
Figure 11 is a simplified perspective view of another jig for beam calibration;
Figure 12A is a schematic and sectional view of one spark assembly of the other jig;

Figure 12B is a front view of the spark assembly shown in Figure 12A; and

Figure 12C is a rear view of the spark assembly shown in Figures 12A and 12B.

Detailed Description of the Preferred Embodiment.

The reader is referred to EP-A-0244513 as background.

Apparatus

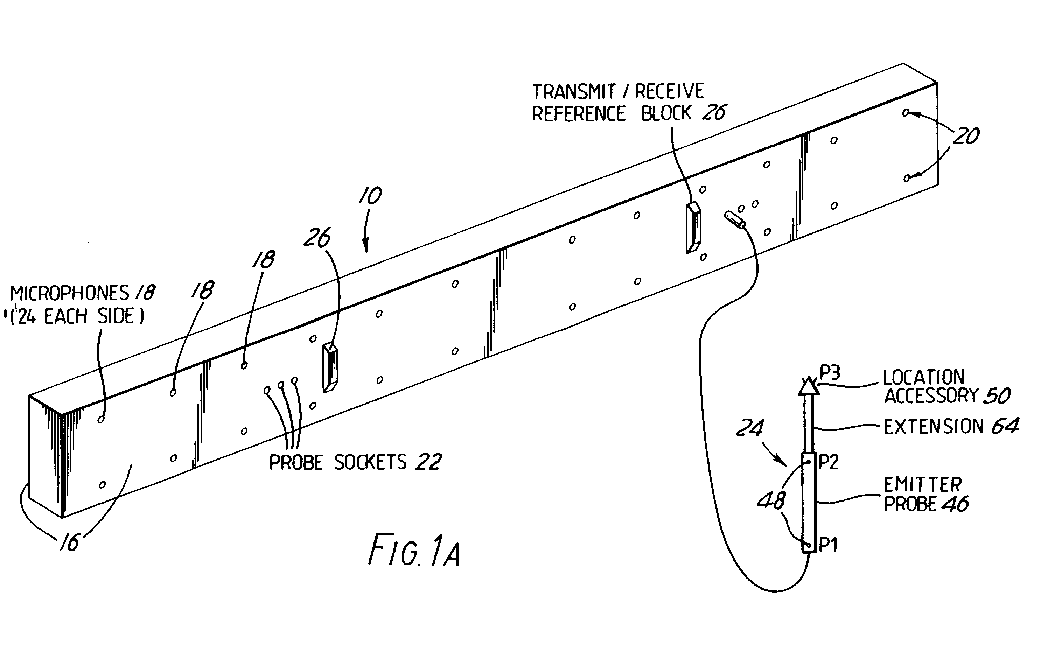

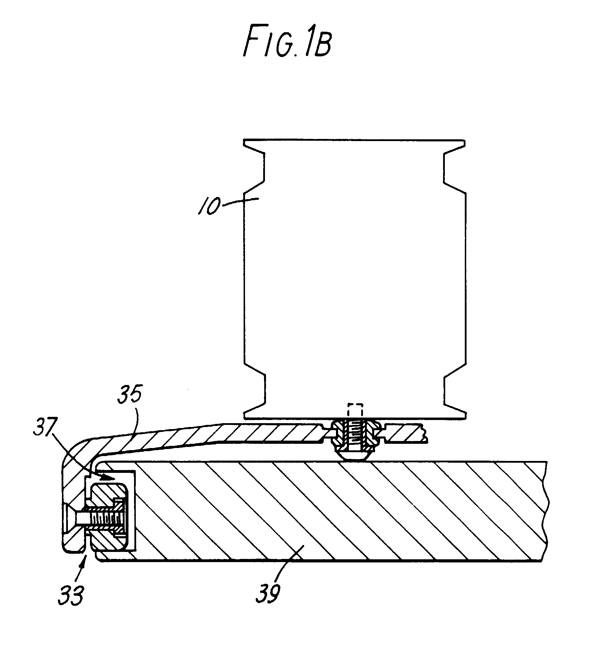

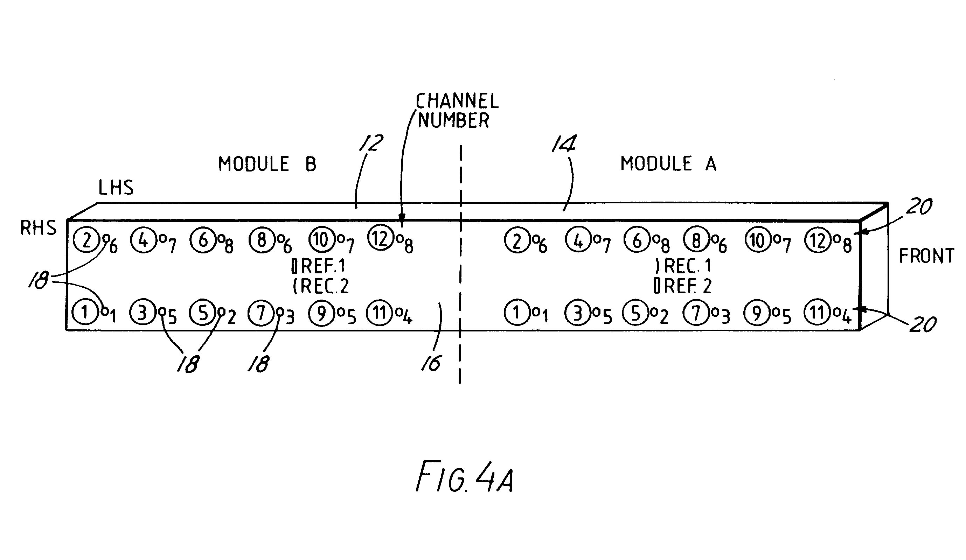

The system for vehicle measurement comprises a single beam 10 as shown in Figures 1A and 1B, which is mounted longitudinally with respect to the vehicle. The beam 10 is made of extruded aluminium of an approximately rectangular cross-section (approximately 17.5 cm by 7.5 cm) and is approximately 3.6m long. It consists of two independent modules 12,14 as shown in Figure 4A. Referring back to Figure 1A, each beam has two opposing sides 16,16 which carry twenty four microphones 18 each. Accordingly, the beam has twelve microphones along each edge 20 of a side 16, which is twice as many as disclosed in EP-A-0244513. Also, only a single beam is used rather than a series of transverse beams. The beam 10 has six sockets 22 on each side for emitter probe assemblies 24 and two transmit/ receive reference blocks 26 mounted on each side.

The beam 10 is rigid and is mounted on pairs of wheels 33 fixed under the beam 10 at points which result in minimum bending. Each wheel is connected to the beam by a supporting arm 35. As shown schematically in Figure 1B, these wheels 33 drop into and run along runners 37 formed by the undercut sides of a mounting plate 39. A mounting plate 39 is placed under each vehicle to be measured. In use, the beam 10 is easily removed from the mounting plate 39 under one vehicle and positioned on the mounting plate 39 of the next vehicle to be measured.

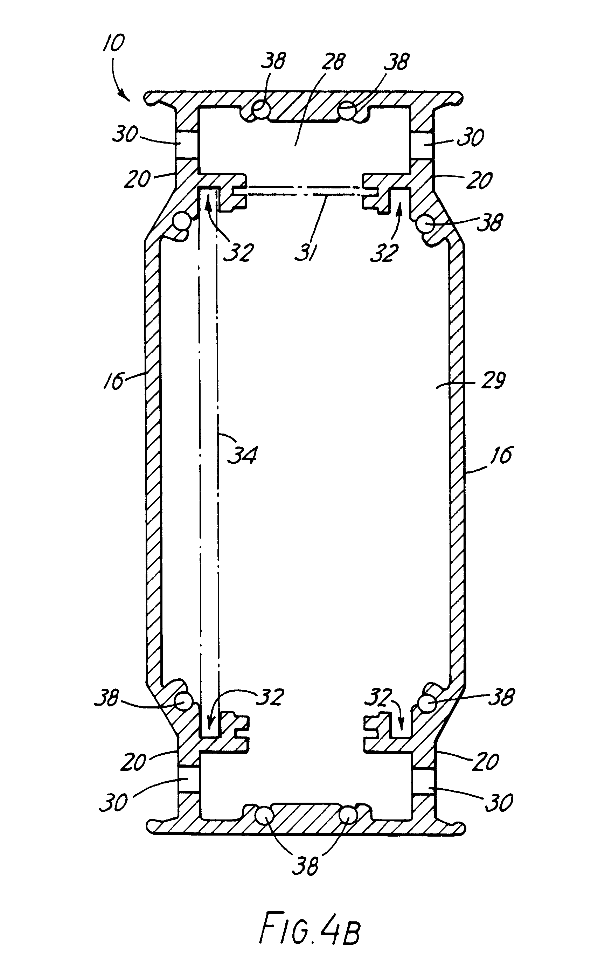

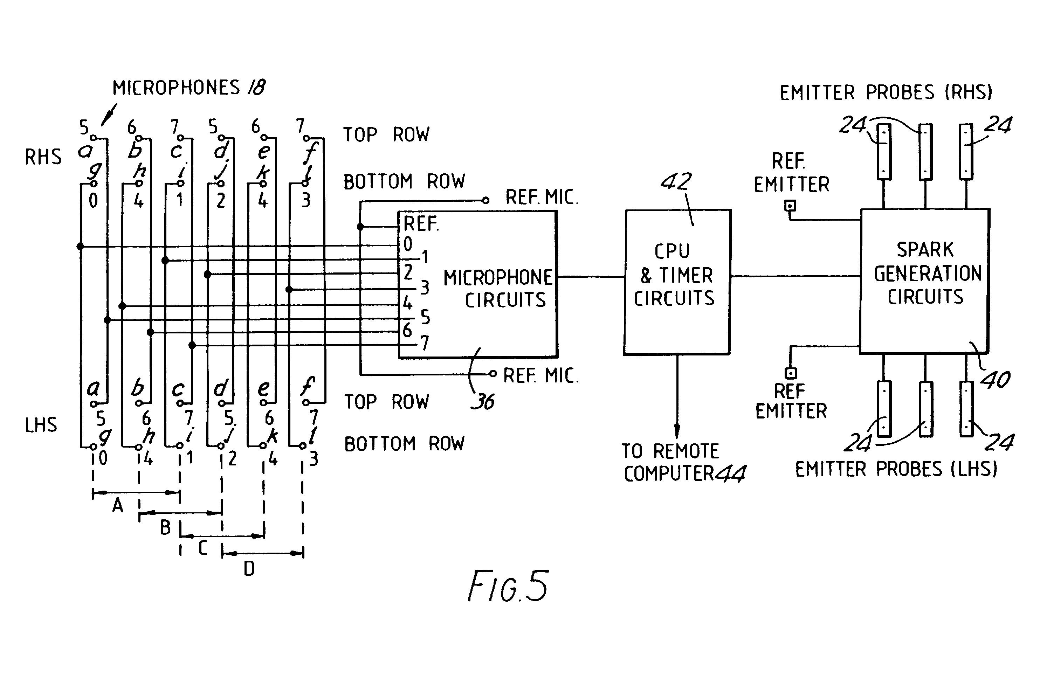

As shown in cross-section in Figure 4B, the beam has a cable duct 28 which is separated from the body 29 of the beam by a partition 31. Also, it has a series of holes 30 on each edge 20 of a side 16 to receive the microphones 18. The beam has longitudinal internal grooves 32 in which printed circuit boards (PCB's) 34 are mounted. The PCB's hold microphone circuits 36 as described below with reference to Figure 5 and can be connected together. The beam includes screw mounts 38 near its ends for screwing end plates (not shown in Figure 4B) to the beam 10. The end plates include handles for carrying the beam 10.

The basic electrical circuitry of the vehicle measurement system which is shown in Figure 5, includes the microphones 18 of one of the modules 12, 14 of the beam 10 and microphone circuits 36, emitter probe assemblies 24 and spark generation circuits 40. The microphone circuits 36 and spark generation circuits 40 are connected to CPU and timer circuits 42 for automatic control and measurement. The CPU and timer circuits 42 are coupled to a remote computer 44.

In use the emitter probes 46 are mounted to the car body at selected points to be measured using various fixtures. The microphones 18 along the beam 10 detect sparks emitted by the probes 46, allowing the positions of the probes 46 and hence the selected points on the car body to be measured.

Referring back to Figure 1A, an emitter probe assembly 24 comprises an emitter probe 46 with a spark generator 48 at each of its two ends (at positions $P_1$ and $P_2$). The probe assembly 24 also includes a location accessory 50 which is mounted on the end of the probe portion near $P_2$, and is used to fix the probe to the vehicle body at a predetermined position $P_3$. As shown in Figure 6A, the probe 46 includes spark generators 48 each comprising a pair of wire electrodes 52,54 and a ceramic insert 56 through which the wires pass. Electricity is supplied via leads 58. The probe 46 includes an annular magnet 60 in its end 62 near position $P_2$. The location accessory 50 is fixed to this directly or with an extension 64 or series of extensions inbetween.

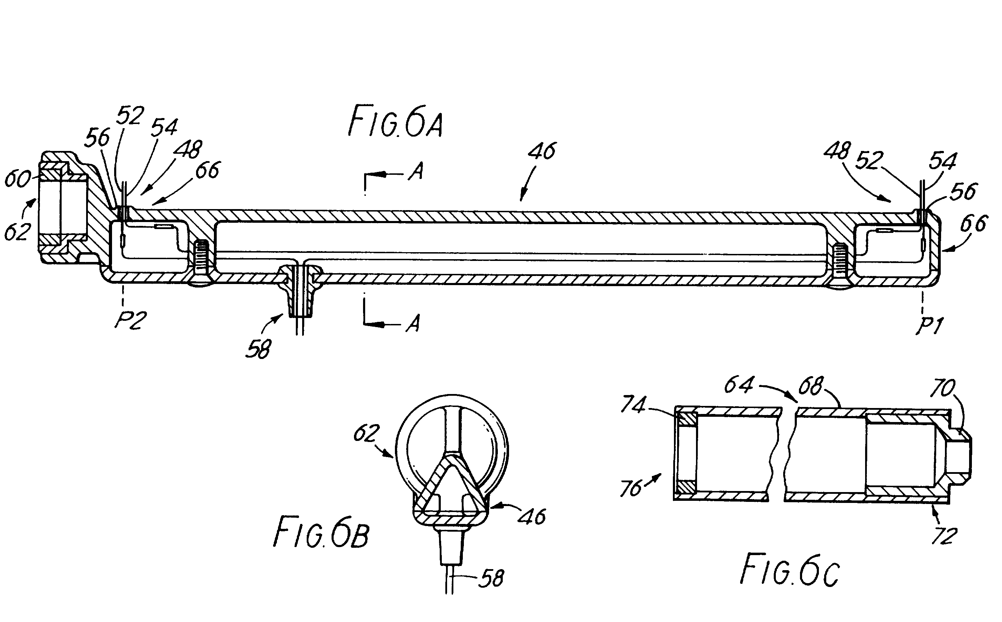

As shown in Figure 6B, the measurement probe 46 is of a substantially triangular cross-section at its two end portions 66 on which spark generators 48 are respectively mounted (positions P1 and P2). Thus, the spark generators 48 are each mounted at a triangle 'apex'. Accordingly, a pulse signal is emitted which travels in a wide-angled arc.

As shown in Figure 6C, an extension 64 has a cylindrical body 68 with a spigot 70 of magnetisable material at one end 72 and an annular magnet 74 of rare earth material at the other end 76. The spigot 70 is for insertion into the annular magnet 60 of the probe end 62, which is shown in Figure 6A, or alternatively, into an annular magnet 74 of an end 76 of another extension 64. Spigots 70 and annular magnets 60,74 cooperate by magnetic attraction to hold probes and extensions together. The probe assembly 46 is then mounted on the extension 64 as shown in Figure 1A to provide a lengthened probe assembly.

Such a lengthened probe assembly is useful when a probe assembly must be fixed in a recess in the vehicle body. The user is instructed whether or not an extension is required by the microprocessor in response to stored data concerning the vehicle in question.

The probe 46 is fixed to the car body directly or with the use of an extension 64, using any of a variety of location accessories 50. As a car body typically has made holes, for example to allow door hinges to be fixed, one type of location accessory 50 is for fitting in holes. It includes two jaws which are moved radially outwards to grip the rim of the hole. Another type has three pinchers which can grip onto exposed bolt-heads, nuts and the like. A third type is threaded for mounting on exposed bolt ends. All location accessories include a magnetisable spigot for cooperation with an annular magnet 60, 74 of an emitter probe 46 or extension 64.

Another way to connect an emitter probe 46 to a location accessory is by using an upper body coupler 78, as shown in Figure 7A. This is particularly suitable for position measurements of parts of the upper car body such as a front suspension strut. A vehicle has two front suspension struts under its bonnet, one on either side. A front suspension strut is conventionally known as a MacPherson strut. The upper end of a front suspension strut ends in a dome through which a threaded bolt protrudes. The upper body coupler 78 is connected to the bolt by a location accessory 50.

The upper body coupler 78 can also be used connected to the car body by a location accessory at an appropriate hole in the bodywork such as around the door frame. The upper body coupler 78 has a body 80 consisting of a rod in a U-type shape. The body 80 has two rounded 90° bends 82,84 and three substantially straight portions 86,88,90. One end 92 of the body 80 includes a fixture 94 on which a ball-and-socket joint 96 is mounted, in an axis parallel to that of the second portion 88 of the body 80 and facing the other end 98 of the body 80.

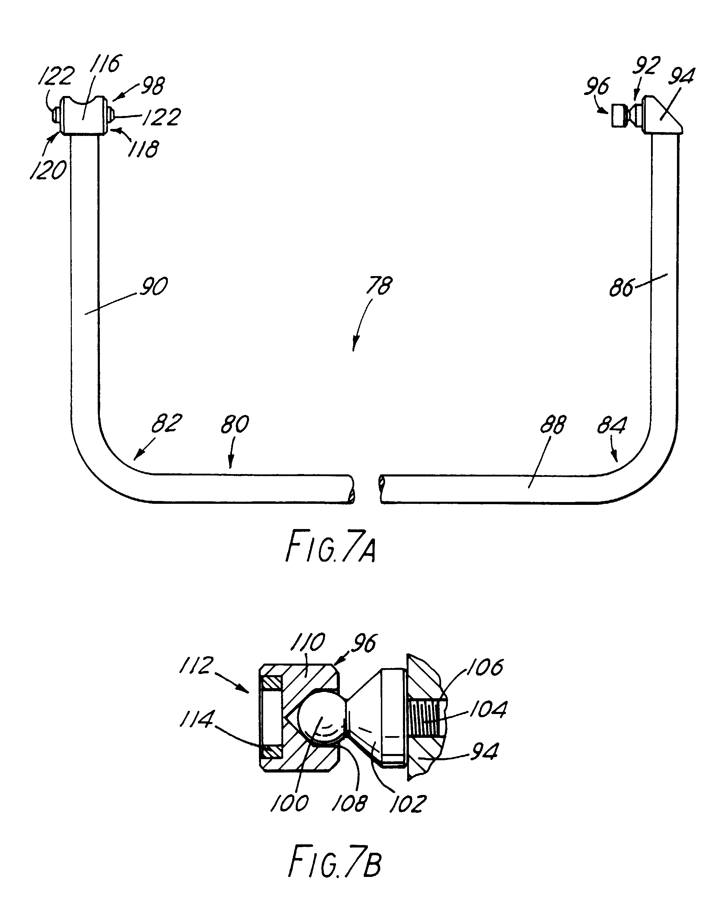

As shown in Figure 7B, the joint 96 comprises a ball 100 fixed at the apex of a conical element 102. The conical element 102 is attached to fixture 94 by its threaded knurl 104 being screwed in to a threaded hole 106 in the fixture 94. The ball 100 is rotatable within a socket 108 of a ball housing (chuck) 110. The end 112 of the chuck 110 opposite the socket 108 has an annular magnet 114 which is flush or 'sub-flush' with that end 112. This allows the upper body coupler 78 to be fitted to the vehicle body by magnetic attraction to a location assembly 50 mounted on the car body.

The other end 98 of the body 80 of the upper body coupler 78 includes a second fixture 116 for connecting the probe 46. The second fixture element 116 has two sides 118,120, from each of which a spigot 122 of magnetisable material extends. The probe 46 (with or without extension(s) 64) is fixed by an operator on one side or other of the second fixture element 116 such that the end 62 of the probe 46, or the end 76 of a probe extension 64 on which the probe 46 is mounted, is fitted on one of the two spigots 122,122.

In use, the position of the end 92 of the upper body coupler 78 which is connected to the car body is calculated from the spark generator positions P1,P2. This is possible because the separation between the two ends 92,98 of the upper body is known as are the lengths of extensions 64 and the dimensions of a probe 46. The microprocessor "knows" that the spark generator positions P1, P2 and the upper body coupler end 92 lie along the same axis and instructs the user which extensions, probes and fittings to use. Accordingly, the position of the end 92 connected to the car body is automatically determined from the measured spark positions P1,P2 by the microprocessor.

Methods

For an explanation of the basic methods used for vehicle measurement, the reader is referred to EP-A-0244513. Other details are provided later in this description. The beam 10 is positioned on a mounting plate so as to be approximately parallel to the length of the vehicle body. The position of the beam is not critical. By the use of software driven menus, the user instructs the measurement system, which is microprocessor-controlled, of the type of vehicle being measured. Specifically, the user selects the appropriate manufacturer, model and model-type. The appropriate information files for that vehicle are then loaded and a graphical representation of that car body displayed on the visual display unit (VDU) of the microprocessor. The representation includes points on the car body for which standard relative positions are known.

The user first chooses some reference points on the vehicle body, then selects some other points he wishes to measure. He is aided in this by the microprocessor which allows expanded (zoom) displays of selected regions of the vehicle representation.

The microprocessor then "intelligently" instructs the user which location accessory 50, extensions (if any) 64 (or coupler 78) to use at each of the selected points. The reference points are taken from an undamaged part of the vehicle body, and define three perpendicular reference planes (length, width, height). Positions of other points are then measured relative to the reference planes defined by the reference point data.

We have found that to achieve acceptable accuracy in determining the position $P_3$, it is necessary to determine the relative positions of $P_1$ and $P_2$ to within about 0.5mm and the absolute positions to within about 1.5mm. This in turn implies that the linear distances between the spark generators and collecting microphones must be known to within 0.1 to 0.2mm. Ultrasonic measurement in 3 dimensions is far more prone to error than linear measurement where a reference system can work effectively. If a fixed reference were relied upon for 3 dimensional measurement the required accuracy would not be possible.

Calculation of Sound Velocity and Emitter Position

In order to convert time data received by the microprocessor into distance data, the velocity of propagation of sound must be known accurately. However, the velocity of sound varies as a function of temperature (also pressure, humidity and $CO_2$ content). Consequently, any measuring system must be able to determine the velocity of sound in selected regions in order to accurately calculate distance data.

It has been found that by a suitable choice of receiver array, a set of equations can be used to find coordinates which do not depend on separately calculating the velocity of sound. The equations are listed in EP-A-0244513. The array consists of at least six microphones arranged as sets of three in two parallel lines. Through calculations the velocity of sound and cartesian coordinates of the emitter are found. The arrangement of emitter and microphones is illustrated in Figure 6D of EP-A-0244513 and the equation used to calculate velocity,
$V = SQRT(2L^2/t_3^2+t_1^2-2t_0^2)$ is mentioned there. This method of velocity determination is denoted the line array method.

The method allows sound velocity in a localised area to be measured automatically without the need for a reference spark. Although the basic method is known, in order to be useful in practice, we have found that more microphones are required than has been mentioned in the prior art. Specifically rows of 12 microphones are distributed along the beam rather than merely six as mentioned in EP-A-0244513. Still furthermore, calibration of microphones, as will be described below, allows the line array method of velocity measurement to be used accurately in practice. It also eliminates the need for high accuracy positioning of the microphones upon manufacture.

Consistency check of Position data

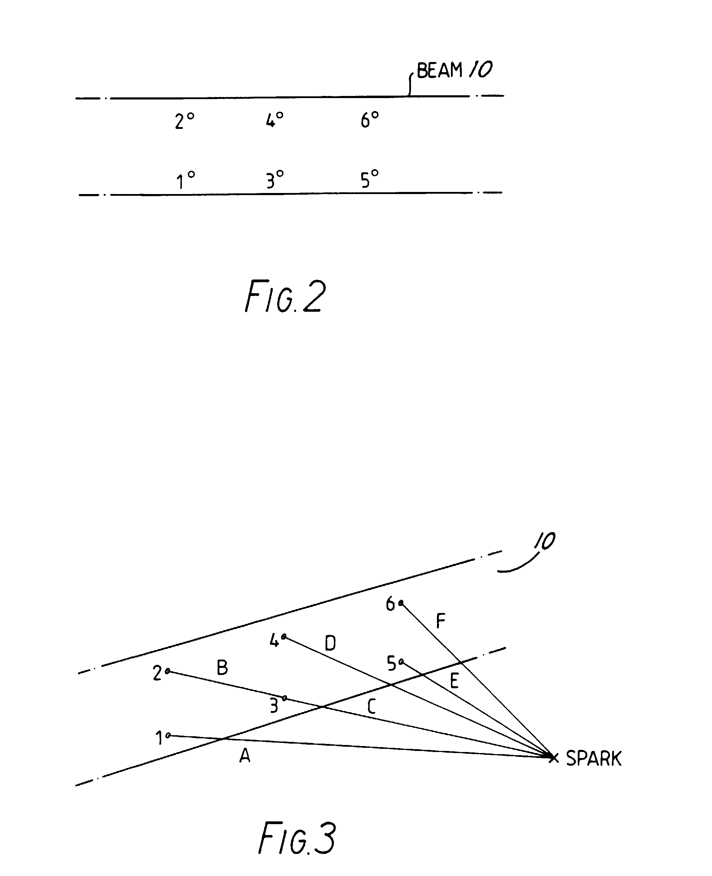

Taking the nearest six active microphones to a spark generator as shown in Figures 2 and 3, measurements of position are repeated using three different microphone sub-sets as follows:

    (i) 1, 2, 3, 4
    (ii) 3, 4, 5, 6
    (iii) 1, 5, 2, 6

The x, y, z position values that each subset provides are rejected if they are too different from the values calculated using the other subset(s). If accepted, the results for x, y and z from the three microphone sub-sets are averaged.

Taking the first sub-set as an example, microphones 1 and 3 are used to provide an x coordinate value $x_1$, and microphones 2 and 4 give $x_2$. Then $x_1$ and $x_2$ are averaged to give the x coordinate value. The z coordinate value is found similarly, then the y coordinate found using x and z results.

Detection of Temperature Variations (Air homogeneity) and Unstable Air Conditions

By analysing the data received by a group of six microphones, information on temperature gradients and turbulence can be gained. Taking a group of six active microphones as shown in Figures 2 and 3, it is possible to detect vertical temperature gradients. The line array method of sound velocity detection is used to determine four velocity values from four planes as follows:-

    (i) Spark produced at $P_1$ detected at microphones 2, 4, 6
        (Time delays B, D, F)
    (ii) Spark produced at $P_1$ detected at microphones 1, 3, 5
        (Time delays A, C, E)
    (iii) Spark produced at $P_2$ detected at microphones 2, 4, 6
        (Time delays B, D, F)
    (iv) Spark produced at $P_2$ detected at microphones 1, 3, 5.
        (Time delays A, C, E)

If the four velocity values agree, they are averaged to give the speed of sound and the subsequent measurements of emitter position are accepted.

It is possible to detect vertical temperature gradients and compensate for them (provided there is no significant air turbulence). As a further check it is also possible to detect unstable air conditions (homogeniety in the longitudinal axis) by checking ratios of distances (i.e. time delays) using the six active microphones, as shown in Figure 3. Taking the six time delays (which are related to distances) A, B, C, D, E, and F which were measured and a constant K found as $C^2 - D^2$, by defining a parameter R and assuming $R_{CD} = 1$, the following are calculated:-

$$R_{AB} = A/\sqrt{B^2+K}$$

$$R_{EF} = E/\sqrt{F^2+K}$$

Only if $R_{AB}$ and $R_{EF}$ are equal to unity (i.e. $1\pm 0.005$) can the position data be considered valid.

Simple Circuitry

As shown in Figure 1A, there are a total of 48 microphones along a beam. By connecting microphones together as shown in Figure 4A it is possible to use only 16 channels of microphone circuitry for one beam (2 reference channels are also used). Correspondingly, for one module of a beam, 8 channels are used as shown in Figure 5.

Despite the reduced number of channels, the active microphone array (i.e. the six microphones 18 closest to the spark) is readily located. The received data from microphones on the bottom row which pass via channels 0 to 4 are examined by the microprocessor and the three shortest time delays are selected. Then using the following simple analysis, the correct active microphone array, A to D as shown on Figure 5, is determined:-

    If the sum of the 3 relevant channel numbers = 5 then we are working with array A

If the sum of the 3 relevant channel numbers = 9 then we are working with array D

If channel 1 is the shortest delay then we are working with array B

If channel 2 is the shortest delay then we are working with array C.

## Measurement Accuracy

Measurement accuracy is affected mainly by errors in the placement of microphones 18 in the beam 10.

The correction factors which must be applied to compensate for errors in microphone positioning will vary depending on the directions of approach of the sound to the microphone 18 so this must be known approximately before a correction can be applied.

The system produces a spark at a probe 46, collects the received data, then computes the approximate spark coordinates ($P_1$ and $P_2$). From this, it determines the approximate direction of the sound to each of the 6 microphones and determines the appropriate correction factors $\Delta x$, $\Delta y$, $\Delta z$ to modify the collected data. These correction factors follow:

$$\Delta x = x_c * \frac{x_{DIST}}{\sqrt{x_{DIST}^2 + y_{DIST}^2}}$$

$$\Delta y = y_c * \frac{y_{DIST}}{\sqrt{x_{DIST}^2 + y_{DIST}^2 + z_{DIST}^2}}$$

$$\Delta z = z_c * \frac{z_{DIST}}{\sqrt{z_{DIST}^2 + y_{DIST}^2}}$$

where $x_{DIST}$, $y_{DIST}$, $z_{DIST}$ denote the approximate coordinate position of a spark generator relative to a microphone. The data is then re-processed to accurately determine the true spark coordinates.

The factors $x_c$, $y_c$, $z_c$ are determined from calibration of beams 10 at the factory as will be described below.

## Beam Calibration/Calibration of Microphone positions

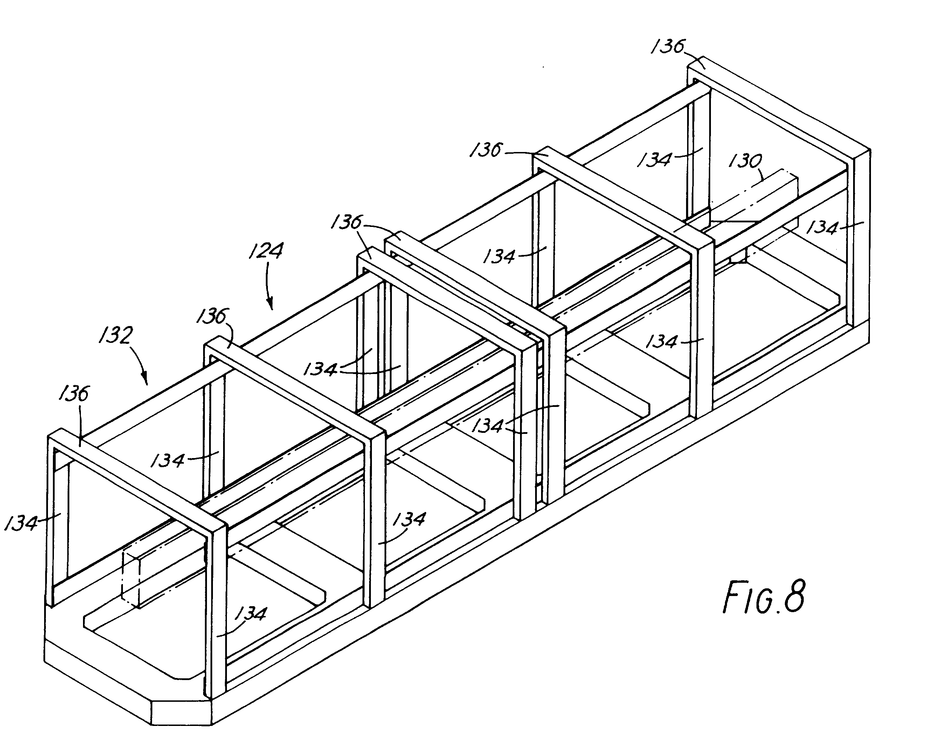

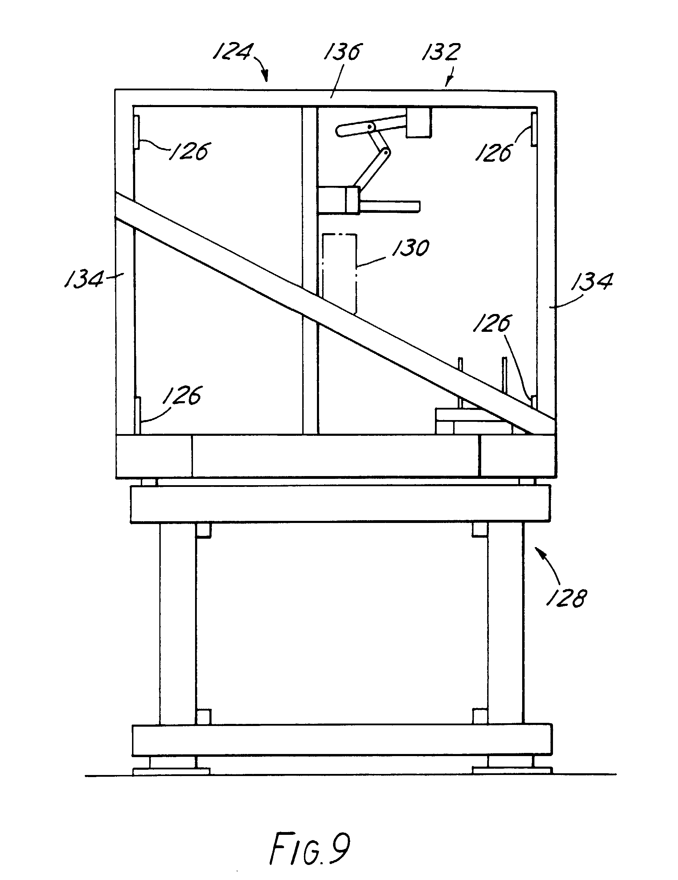

The beam calibration jig 124 which is shown in Figure 8 (perspective view) and in Figure 9 in cross-section, provides the array of 24 spark assemblies 126 required for calibration of the beam 10. The calibration jig 124, which is mounted on a stand 128 (not shown in Figure 8), is surrounded by an insulating cover (not shown) to provide a thermally stable environment around the beam during calibration.

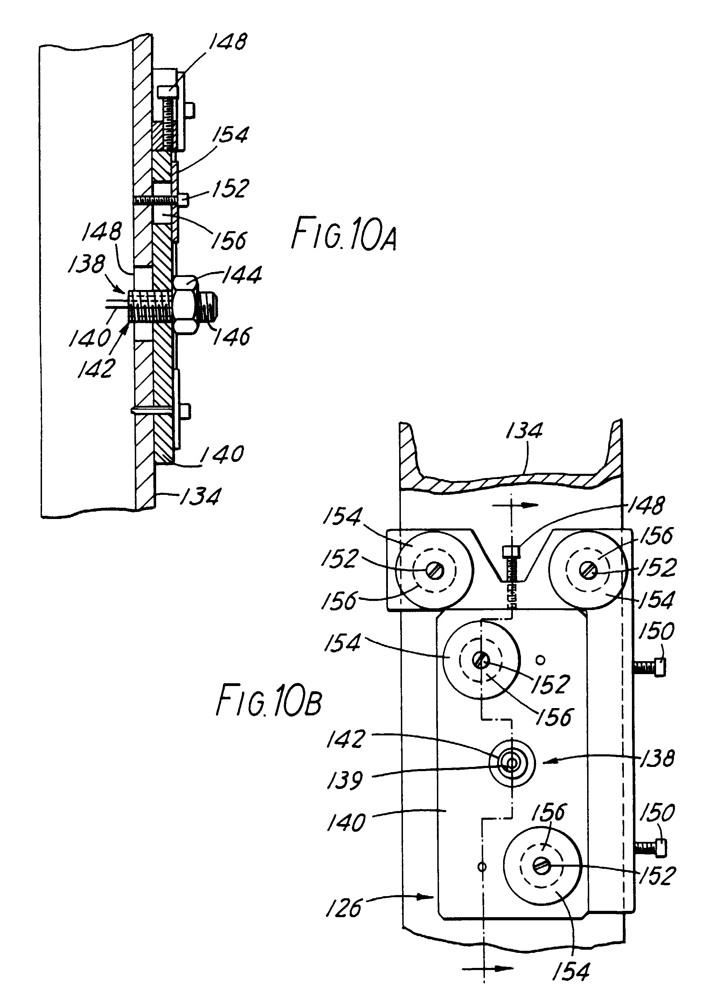

The beam is clamped in a fixed, nominally central, position 130 within the jig 124 in a manner which prevents any twisting or bending stress. The jig includes a frame 132 comprising upstruts 134 and cross-bars 136. One spark assembly is shown in Figures 10A and 10B.

The temperature inside the jig is thermo-controlled by a heater under the jig (not shown) and a set of ten thermocouples (not shown) disposed at various places around the jig such as against the frame, near the heater or with ends extending out into the air.

The coordinates of each spark assembly 126 are determined to within 0.2mm in the three principal axes. This is achieved by photogrammetry or theodolite survey of the assembled jig 124. Targets are fitted to the face of each spark assembly for this purpose. Spark assemblies 126 are designed to be easily replaced in the event of failure without invalidating jig calibration data.

The spark generators 138 are housed in PTFE (polytetrafluoroethylene) support plates 140 as shown in Figure 10A. These permit minor adjustment in all three axes. Each spark generator 138 includes a spark emitter 139 within a PTFE insulating ring 142. A spark generator 138 is held in place on a PTFE support plate by a nut 144 and bolt 146. The bolt 146 passes through an oversized hole 147 in the upstrut 134. To allow adjustment of emitter positions, the PTFE plate 140 is moveable in two directions in its position on an upstrut 134 by means of one vertical adjustment screw 148 and two horizontal adjustment screws 150. The PTFE plate 140 is fixed adjustably to the upstrut 134 by four screws 152 with washers 154. The screws 152 pass through the PTFE support plate 140 via oversized holes 156.

After the positions of the spark emitters have been surveyed to establish their relative positions, a grid of four spark emitters (pairs on neighbouring upstruts on a selected side of the beam) are then fired in sequence and the timing data is collected from the six microphones facing the grid. Using the known spark position the precise X,Y and Z coordinates of each microphone is deduced (using the same equations as those used for the beam itself, described in EP-A-0244513). The $x_c$, $y_c$ and $z_c$ deviations of each microphone from its surveyed coordinates are calculated and stored in the hardware of the beam (in eeprom), to be read every time the vehicle measurement system is turned on.

Measurements using the jig and subsequent calculations to determine calibration data are made under computer control. After calibration, a print-out of calibration data is also provided.

The jig includes a reference bar (not shown) having a microphone and spark emitter at each end, such that the microphone at one end is of known separation from the spark emitter at the other end. By measuring the time delay between emission and reception of a spark, sound velocity is calculated. Knowing velocity and spark emitter positions precisely allows microphone positions to be determined accurately.

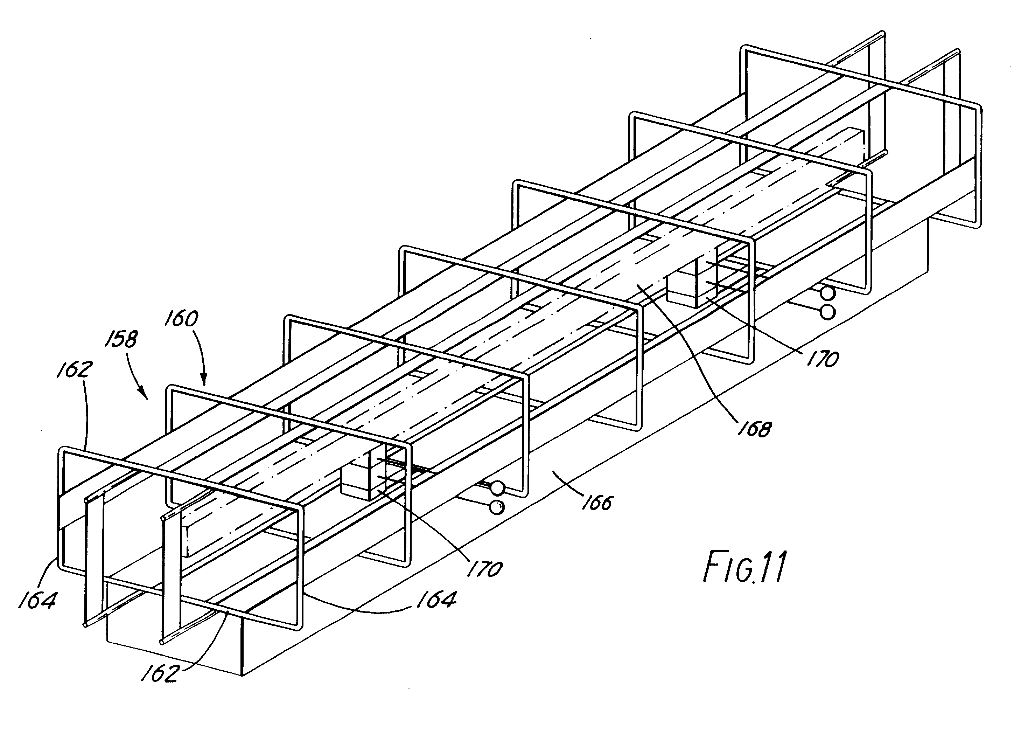

Another beam calibration jig 158 is shown in Figure 11. It is 70 cm high, lm 30cm wide and 3m 50cm long. It includes a frame 160 having seven sets of cross-bars 162 and up-struts 164. Also, it has a rigid, stable base 166. The beam 10 for calibration is placed at position 168 on adjustable stands 170,170.

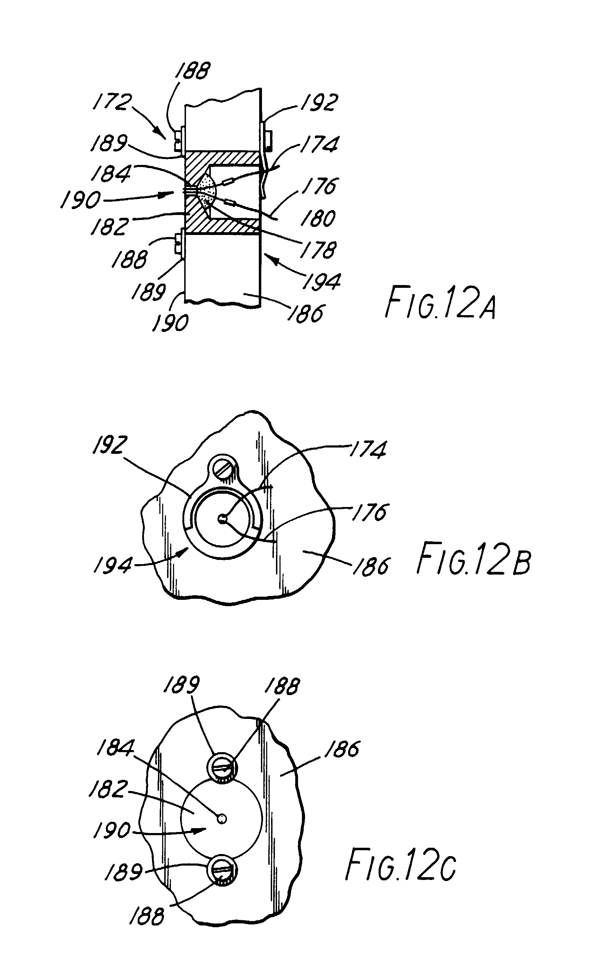

The beam calibration jig 158 shown in Figure 11 has 112 spark assemblies. One spark assembly is shown in Figures 12A, 12B and 12C. The coordinates of each spark assembly is determined to within 0.04 mm in each principal axis.

As shown in Figure 12A, each spark assembly 172 includes positive and negative wires 174,176 held in epoxy resin potting 178 within an aperture 180 in a PTFE mount 182. The electrode wires 174,176 are connected to electricity supplies (not shown) through a ceramic insert 184. Each spark assembly 172 is held in position on a mounting plate 186 by means of a pair of screws 188,188 with washers 189 which are screwed into one side 190 of the mounting plate 186 and abut the rear 190 of the PTFE mount 182. As shown in Figures 12A and 12B, a screwed-on retaining spring 192 which has an approximately horse-shoe shape is fixed on the other side 194 of the mounting plate 186. This spring 192 keeps the PTFE mount 182 of the spark assembly 172 within the mounting plate 186 whilst allowing the electrode wires 174, 176 to be exposed.

A Typical Measurement Sequence

A typical sequence is as follows:-

1) Fire the reference sparks and check for unacceptable air currents.

2) Fire the sparks at $P_1$ and $P_2$

3) Collect the count data (time delays) from the 8 microphone channels

4) Determine whether left or right side of beam is active from the probe channel number which is being used

5) Find the 3 lowest counts from the microphone channels on the bottom row. Process the data to determine which array of 6 microphones is closest to the spark and sort data into the appropriate sequence

6) Using the current speed of sound taken from the reference channels calculate the approximate X, Y and Z position of each spark at positions $P_1$ and $P_2$

7) Determine the angle of the sound path to each microphone in the active array

8) Apply appropriate correction factors calculated from the beam calibration data

9) Calculate the speed of sound using the "line array" method in 4 planes; $P_1$ to top row, $P_1$ to bottom row, $P_2$ to top row and $P_2$ to bottom row

10) Check that the air conditions are homogeneous in the longitudinal axis. The ratio of time delays from a spark to each vertical pair of microphones can be determined theoretically. If the data does not agree in practice then the speed of sound must vary within the volume.

11) Check that the speeds of sound derived from the 4 "line array" planes do not imply too great a vertical temperature gradient. If the data are inside a given tolerance, convert the time delays to distances, using the 4 plane measurements (step 9) to compensate for small temperature gradients.

12) Calculate the X, Y and Z dimensions using microphones 1, 2, 3 and 4, then 3, 4, 5 and 6, and 1, 2, 5, 6, as shown in Figure 2.

13) Check that the variation between results is acceptable. If so average the results.

14) Check that the calculated distance between $P_1$ and $P_2$ agrees with the known (constant) distance.

15) Repeat steps 2 to 14 for each probe which is attached. (There may be up to twelve probes).

16) Fire the reference sparks. Check for unacceptable air currents and for consistency with results of step 1.

17) Translate the measured coordinates to give data related to length, width and height relative to the vehicle and display these results.

If a measurement fails any of these checks the system automatically repeats the measurement several times. If the failure was due to minor turbulence or some other temporary disturbance a subsequent measurement may be successful.

If inaccurate data is consistently obtained the controlling computer can collate all the available probe and reference data ('Good' or 'Bad') and present meaningful reasons for the failure and suggestions for rectification to the user.

Remote Computer Control

The measuring system is controlled by the remote computer which also contains a database of vehicle data and graphics. The user can change the language at the touch of a button. All text and user interactions (i.e. typing Y for yes N for No etc.) are language dependent.

It will be appreciated from the above that the preferred system is more than simply a measurement system relying on detecting time delays to compute distances, but is capable of assessing the local air conditions at the time that the emitter probe is fired. It can determine whether the collected data is valid and also whether its own calibration is still good.

## Claims

1. A method of vehicle measurement, comprising:

   emitting a signal from an emitter attached to a vehicle and receiving it at a plurality of signal receivers;
   measuring transmission times taken between signal emission and reception;
   calculating from the transmission times speed data on the transmission of signals in different selected directions;
   calculating position data for at least one point on the vehicle in dependence upon transmission times and/or speed data; and
   accepting the speed and/or position data only if the speed data agree to within a predetermined range.

2. A method according to claim 1, in which if speed data in different directions do not agree, the measurements are repeated.

3. A method according to claim 1 or 2, in which the emitted signals are pulsed.

4. A method according to claim 3, in which the pulsed signals emitted comprise sound bursts produced by application of an electrical potential difference between a pair of electrodes at the emitter resulting in electrical sparking.

5. A method according to claim 4, in which the signals are received by microphones.

6. A method according to any of claims 1 to 5, in which the speed data is calculated using the line array method operating on the outputs of at least three receivers.

7. A method according to any of claims 1 to 5, using two signal emitters P1, P2, and six active receivers disposed in two parallel rows of three, in which each of the following four emitter and receiver combinations are used as follows:- (i) first emitter $P_1$ and receivers in the first row, (ii) first emitter $P_1$ and receivers in the second row, (iii) second emitter $P_2$

and receivers in the first row, (iv) second emitter $P_2$ and receivers in the second row.

8. A method according to any of claims 1 to 7, including averaging speed values which agree to within the predetermined range and using the resultant in determination of position data.

9. A method according to any of claims 1 to 8, including selectively compensating position data in dependence upon speed variations in different directions.

10. Vehicle measurement apparatus for use in the method of claim 1, comprising:

    at least one signal emitter (46) for attachment to a vehicle;
    a plurality of signal receivers (18) for receiving signals emitted by the emitter(s); and
    means (42,44) for measuring transmission times between signal emission by the emitter (s) and reception by the receivers, for calculating from the transmission times speed data on the transmission of signals in different selected directions, for calculating position data for at least one point on the vehicle in dependence upon transmission times and/or speed data, and for accepting the speed and/or position data only if the speed data agree to within a predetermined range.

11. Apparatus according to claim 10, in which if the speed data in different directions do not agree, the measurements are repeated.

12. Apparatus according to claim 10 or 11, in which the signals emitted by the emitter(s) are pulsed.

13. Apparatus according to claim 12, in which the pulsed signals comprise sound bursts produced by application of an electrical potential difference between a pair of electrodes at the emitter resulting in electrical sparking, and in which the receivers are microphones.

14. Apparatus according to any of claims 10 to 13, in which there are at least three receivers (18).

15. Apparatus according to claim 14, in which the speed data is calculated using the line array method.

16. Apparatus according to any of claims 10 to 15, in which there are two signal emitters P1, P2, and six active receivers disposed in two parallel rows of three, and four speed values are calculated using each of the following four emitter and receiver combinations:-

(i) first emitter $P_1$ and receivers in the first row,
(ii) first emitter $P_1$ and receivers in the second row,
(iii) second emitter $P_2$ and receivers in the first row,
(iv) second emitter $P_2$ and receivers in the second row.

17. Apparatus according to any of claim 10 to 16, including means which, if the speed values agree to within the predetermined range, averages the values and uses the resultant in determination of position data.

18. Apparatus according to any of claims 10 to 17, including means for selectively compensating position data in dependence upon speed variations.

**Patentansprüche**

1. Ein Verfahren zur Fahrzeugvermessung, enthaltend:
Aussenden eines Signals von einem an einem Fahrzeug befestigten Sender und Empfangen des Signals an einer Vielzahl von Signal-Empfängern;

Messen der zwischen Signal-Aussendung und Signal-Empfang genommenen Übertragungszeiten;
Berechnen von Geschwindigkeitsdaten für die Übertragung von Signalen in verschiedene ausgewählte Richtungen aus den Übertragungszeiten;
Berechnen von Positionsdaten für zumindest einen Punkt auf dem Fahrzeug in Abhängigkeit von Übertragungszeiten und/oder Geschwindigkeitsdaten; und
Annahme der Geschwindigkeitsdaten und/oder Positionsdaten nur, wenn die Geschwindigkeitsdaten innerhalb eines vorherbestimmten Bereichs übereinstimmen.

2. Ein Verfahren nach Anspruch 1, bei dem die Messungen wiederholt werden, wenn Geschwindigkeitsdaten in verschiedenen Richtungen nicht übereinstimmen.

3. Ein Verfahren nach Anspruch 1 oder 2, bei dem die ausgesandten Signale gepulst sind.

4. Ein Verfahren nach Anspruch 3, bei dem die gepulsten ausgesandten Signale Schallbursts enthalten, die durch Anlegen einer elektrischen Spannung zwischen zwei Elektroden an dem Sender und dadurch hervorgerufene elektrische Funkenbildung entstehen.

5. Ein Verfahren nach Anspruch 4, bei dem die Signale von Mikrophonen empfangen werden.

6. Ein Verfahren nach einem der Ansprüche 1 bis 5, bei dem die Geschwindigkeitsdaten unter Benutzung des mit den Ausgängen von wenigstens drei Empfängern betriebenen Zeilenanordnungs-Verfahrens berechnet werden.

7. Ein Verfahren nach einem der Ansprüche 1 bis 5, bei dem zwei Signal-Sender P1, P2 und sechs aktive, in zwei parallelen Reihen zu je drei angeordnete Empfänger benutzt werden, wobei jede der folgenden vier Kombinationen von Sendern und Empfängern wie folgt benutzt wird:

(i) erster Sender P1 und Empfänger in der ersten Reihe,
(ii) erster Sender P1 und Empfänger in der zweiten Reihe,
(iii) zweiter Sender P2 und Empfänger in der ersten Reihe,
(iv) zweiter Sender P2 und Empfänger in der zweiten Reihe.

8. Ein Verfahren nach einem der Ansprüche 1 bis 7, enthaltend Mittelwertbildung von Geschwindigkeitswerten, die innerhalb des vorherbestimmten Bereichs übereinstimmen, und Benutzung der resultierenden Werte zur Bestimmung von Positionsdaten.

9. Ein Verfahren nach einem der Ansprüche 1 bis 8, enthaltend selektive Kompensation von Positionsdaten in Abhängigkeit von Geschwindigkeitsschwankungen in verschiedenen Richtungen.

10. Fahrzeugvermessungsvorrichtung zum Gebrauch in dem Verfahren nach Anspruch 1, enthaltend:

wenigstens einen Signal-Sender (46) zur Befestigung an einem Fahrzeug;
eine Vielzahl von Signal-Empfängern (18) zum Empfangen von von dem(n) Sender(n) ausgesandten Signalen; und
Mittel (42, 44) zum Messen von Übertragungszeiten zwischen Signal-Aussendung durch den (die) Sender und Empfang durch die Empfänger, zum Berechnen von Geschwindigkeitsdaten für die Übertragung von Signalen in verschiedene ausgewählte Richtungen aus den Übertragungszeiten, zum Berechnen von Positionsdaten für wenigstens einen Punkt auf dem Fahrzeug in Abhängigkeit von Übertragungszeiten und/oder Geschwindigkeitsdaten und zur Annahme der Geschwindigkeits- und/oder Positionsdaten nur, wenn die Geschwindigkeitsdaten innerhalb eines vorherbestimmten Bereichs übereinstimmen.

**11.** Vorrichtung nach Anspruch 10, bei der die Messungen wiederholt werden, wenn die Geschwindigkeitsdaten in verschiedenen Richtungen nicht übereinstimmen.

**12.** Vorrichtung nach Anspruch 10 oder 11, bei der die von dem(n) Sender(n) ausgesandten Signale gepulst sind.

**13.** Vorrichtung nach Anspruch 12, bei der die gepulsten Signale Schallbursts enthalten, die durch Anlegen einer elektrischen Spannung zwischen zwei Elektroden an dem Sender und dadurch hervorgerufene elektrische Funkenbildung entstehen, und bei der die Empfänger Mikrophone sind.

**14.** Vorrichtung nach einem der Ansprüche 10 bis 13, bei der es wenigstens drei Empfänger (18) gibt.

**15.** Vorrichtung nach Anspruch 14, bei der die Geschwindigkeitsdaten durch Benutzung des Reihenanordnungs-Verfahrens berechnet werden.

**16.** Vorrichtung nach einem der Ansprüche 10 bis 15, bei der zwei Signal-Sender P1, P2 und sechs, in zwei parallelen Reihen zu je drei angeordnete aktive Empfänger vorhanden sind und vier Geschwindigkeitswerte unter Benutzung der folgenden vier Kombinationen von Sendern und Empfängern berechnet werden:

(i) erster Sender P1 und Empfänger in der ersten Reihe,
(ii) erster Sender P1 und Empfänger in der zweiten Reihe,
(iii) zweiter Sender P2 und Empfänger in der ersten Reihe,
(iv) zweiter Sender P2 und Empfänger in der zweiten Reihe.

**17.** Vorrichtung nach einem der Ansprüche 10 bis 16, enthaltend Mittel, die, wenn die Geschwindigkeitswerte mit dem vorherbestimmten Berich übereinstimmen, Mittelwerte der Werte bilden und die resultierenden Werte zur Bestimmung der Positionsdaten benutzen.

**18.** Vorrichtung nach einem der Ansprüche 10 bis 17, enthaltend Mittel zur selektiven Kompensation von Positionsdaten in Abhängigkeit von Geschwindigkeitsschwankungen.

**Revendications**

**1.** Un procédé pour la mesure de véhicule, comportant :

l'émission d'un signal à partir d'un émetteur assujetti à un véhicule et sa réception sur une pluralité de récepteurs de signal ;

la mesure des durées de transmission prises entre l'émission et la réception du signal ;

le calcul, à partir des durées de transmission, de données de vitesse sur la transmission des signaux dans différentes directions sélectionnées ;

le calcul de données de position pour au moins un point du véhicule en fonction des durées de transmission et/ou des données de vitesse ; et

l'acceptattion des données de vitesse et/ou de position seulement si les données de vitesse sont situées à l'intérieur d'une plage prédéterminée.

**2.** Un procédé selon la revendication 1, dans lequel, si les données de vitesse dans différentes directions ne concordent pas, les mesures sont répétées.

**3.** Un procédé selon la revendication 1 ou 2, dans lequel les signaux émis sont pulsés.

**4.** Un procédé selon la revendication 3, dans lequel les signaux pulsés émis comportent des éclats sonores produits par l'application d'une différence de potentiel électrique entre une paire d'électrodes sur l'émetteur, provoquant une étincelle électrique.

**5.** Un procédé selon la revendication 4, dans lequel les signaux sont reçus par des microphones.

**6.** Un procédé selon l'une quelconque des revendications 1 à 5, dans lequel les données de vitesse sont calculées en utilisant le procédé de rangée en ligne agissant sur les sorties d'au moins trois récepteurs.

**7.** Un procédé selon l'une quelconque des revendications 1 à 5, utilisant deux émetteurs de signaux P1, P2, et six récepteurs actifs disposés suivant deux rangées parallèles de trois, dans lequel chacune des quatre combinaisons suivantes des émetteurs et des récepteurs est utilisée :

(i) premier émetteur $P_1$ et récepteurs de la première rangée,

(ii) premier émetteur $P_1$ et récepteurs de la seconde ragnée,

(iii) second émetteur $P_2$ et récepteurs de la première rangée,

(iv) second émetteur $P_2$ et récepteurs de la seconde rangée.

8. Un procédé selon l'une quelconque des revendications 1 à 7, comportant la mise en moyenne des valeurs de vitesse qui sont situées dans la plage prédéterminée, et l'utilisation du résultat pour la détermination des données de position.

9. Un procédé selon l'une quelconque des revendications 1 à 8, comportant la compensation de manière sélective des données de position en fonction des variations de vitesse dans différentes directions.

10. Dispositif de mesure de véhicule pour son utilisation dans le procédé de la revendication 1, comportant :

au moins un émetteur de signal (46) destiné à être assujetti à un véhicule ;

une pluralité de récepteurs de signaux (18) pour recevoir les signaux émis par le ou les émetteurs ; et

des moyens (42, 44) pour mesurer les durées de transmission entre l'émission de signal par le ou les émetteurs et la réception par les récepteurs, pour le calcul, à partir des durées de transmission, de données de vitesse lors de la transmission de signaux dans différentes directions sélectionnées, pour calculer des données de position pour au moins un point du véhicule en fonction des durées de transmission et/ou des données de vitesse, et pour accepter les données de vitesse et/ou de position seulement si les données de vitesse sont situées à l'intérieur d'une plage prédéterminée.

11. Dispositif selon la revendication 10, dans lequel, si les données de vitesse dans différentes directions ne concordent pas, les mesures sont répétées.

12. Dispositif selon la revendication 10 ou 11, dans lequel les signaux émis par le ou les émetteurs sont pulsés.

13. Dispositif selon la revendication 12, dans lequel les signaux pulsés comportent des éclats sonores produits par l'application d'une différence de potentiel électrique entre une paire d'électrodes de l'émetteur, provoquant une étincelle électrique, et dans lequel les récepteurs sont des microphones.

14. Dispositif selon l'une quelconque des revendications 10 à 13, dans lequel il existe au moins trois récepteurs (18).

15. Dispositif selon la revendication 14, dans lequel les données de vitesse sont calculées en utilisant le procédé de rangée en ligne.

16. Dispositif selon l'une quelconque des revendications 10 à 15, dans lequel il existe deux émetteurs de signaux P1, P2 et six récepteurs actifs disposés suivant deux rangées parallèles de trois, et quatre valeurs de vitesse sont calculées en utilisant chacune des quatre combinaisons suivantes des émetteurs et des récepteurs :

(i) premier émetteur $P_1$ et récepteurs de la première rangée,

(ii) premier émetteur $P_1$ et récepteurs de la seconde ragnée,

(iii) second émetteur $P_2$ et récepteurs de la première rangée,

(iv) second émetteur $P_2$ et récepteurs de la seconde rangée.

17. Dispositif selon l'une quelconque des revendications 10 à 16, comportant des moyens qui, si les valeurs de vitesse sont situées à l'intérieur de la plage prédéterminée, font la moyenne des valeurs et utilisent le résultat pour la détermination des données de position.

18. Dispositif selon l'une quelconque des revendications 10 à 17, comportant des moyens pour compenser sélectivement les données de position en fonction des variations de vitesse.

FIG.1A

# FIG.1B

BEAM *10*

2°        4°        6°

1°        3°        5°

FIG.2

*10*

6
    F
4        D
            5
2    B            E
        3        C
1
    A            × SPARK

FIG.3

FIG. 4A

FIG.4B

FIG.5

FIG.6A

FIG.6B

FIG.6C

EP 0 598 809 B1

FIG.7A

FIG.7B

FIG. 8

FIG.9

FIG.10A

FIG.10B

FIG.11

FIG.12A

FIG.12B

FIG.12C